# EUROPEAN PATENT APPLICATION

(11) **EP 3 035 272 A1**
(43) Date of publication of application: **22.06.2016**
(21) Application number: 13891567.3
(22) Date of filing: 21.08.2013
(51) Int. Cl.: G06Q 30/02

(54) **SYSTEM PROVIDING FREE WI-FI SERVICE, ADVERTISEMENT, AND PUBLIC INFORMATION**

(30) Priority: 14.08.2013 KR 20130096957
(71) Applicant: Kim, Kyoung-Sic, Gwangju 501-804 (KR)
(72) Inventor: Kim, Kyoung-Sic, Gwangju 501-804 (KR)
(74) Representative: Stolmár & Partner Patentanwälte PartG mbB
(86) International application number: PCT/KR2013/007490
(87) International publication number: WO 2015/023021

(57) **Abstract**

The present invention relates to a system for providing free Wi-Fi service and various pieces of information. The system comprises: a system server (11) for managing a plurality of routers, providing a free Wi-Fi service to a user terminal accessing Wi-Fi through the router, and also providing an advertisement and information; an advertiser server (12) for providing an advertisement to the system server; and an information providing server (13) for providing information to the system server.

## Description

### TECHNICAL FIELD

The present invention relates to a system which is able to provide various information together with a free Wi-Fi service, and in particular to a system for providing a free Wi-Fi service and various information, wherein a plurality of Wi-Fi routers are installed by selecting a lot of regions where a traffic or a floating population is a lot, thus forming a large area Wi-Fi hot spot, and a free Wi-Fi service can be provided to a plurality of mobile device users by using such a Wi-Fi hot spot as a Wi-Fi advertisement board, whereupon it is possible to provide a main page involving various contents and public information (a traffic information, a region information, a tour information, etc.) together with a free Wi-Fi service.

### BACKGROUND ART

The Wi-Fi is a trademark name of a Wi-Fi alliance and represents a technology which is supporting an IEEE 802.11-based wireless connection, a connection between devices, and a PAN/LAN/WAN configuration. The term Wi-Fi was used as the synonym of the IEEE 802.11. The current Wi-Fi technology includes a lot of 802.11-based software technologies and is being used in a technology which is supported by 802.11, not used for the Wi-Fi technology.

The Wi-Fi communication actually corresponds to a communication between terminals, for example, an AP (Access Point) which has a function to transfer data onto the internet, a notebook computer, a smart phone, etc. with which users may receive information. In order to use a Wi-Fi communication, it needs to have a hardware (a wireless LAN card) for a connection to the terminal. A device drive should be installed, with which the operating system is able to recognize a corresponding wireless LAN card. The terminal, for example, a smart phone, a notebook computer, etc. which have a lot of movements, basically includes such a drive, so the user can use the Wi-Fi without any setting. The users of the desktop computers can easily use the Wi-Fi. In recent years, various peripherals, for example, a game device, a printer, a television, etc. which support the Wi-Fi continue to increase thanks to the wireless connection to the internet. The frequency used for the Wi-Fi is open for the purpose of researches. In recent years, there are a personal wired or wireless access point which uses the Wi-Fi, and a Wi-Fi service, for example, a Wi-Fi, etc. that a communication service provider provides. In this case, the uses of such systems are limited since they are locked with passwords. For this reason, there is not much Wi-Fi which a personal user can easily use.

The Wi-Fi signals that a communication service provider provides are exclusively provided to the subscribes of a corresponding communication service provider. The uses of the personal Wi-Fi signals are locked with passwords. The persons who know the passwords can use the Wi-Fi service. Even through a lot of the Wi-Fi signals are detected, there are not much Wi-Fi signals that the persons can use. So, the persons in general use the data services from the mobile communication company rather than using the Wi-Fi.

Since the data service from the mobile communication company relatively costs a lot, economical burden increases. Since the mobile communication service is not developed for the sake of data communications, it is not appropriate for the sake of data services.

For the sake of this, the Wi-Fi advertisement board and the advertisement method using the Wi-Fi advertisement board of the Korean patent publication number 10-2013-0003872 includes a housing having a predetermined inner space; a cover for covering the housing; an access device which is inserted in the housing and is fixed with the cover; and a fixing unit which is inserted in the housing and is able to fix an antenna of the access point device. The above system is designed to be used for the purpose of advertisements by installing the access point (AP) in the advertisement board. In the above advertisement board, the AP is installed in the advertisement board, so a connection intensity may be enhanced rather than connecting to the Wi-Fi from the outside, but only the persons who visit a corresponding store and know the password can use the Wi-Fi service. It is designed to provide only the Wi-Fi communication services. More specifically, there are not any other functions except for the Wi-Fi service.

In case of the public information, it, in most occasions, is organized in the form of a public advertisement during a commercial advertisement of a radio, a television, etc. In case of a disaster, etc., a public information may be delivered in the form of a breaking news or in the name of an emergency disaster text using a SMS (Short Message Service).

If a person wants to know a detailed information on such services, it needs to search for the information using a search service provided from a portal server and make an access to the searched information. This procedure is complicated, and there is not any appropriate way to provide a public information using a device which uses a Wi-Fi like a smart phone.

### DISCLOSURE OF THE INVENTION

Accordingly, the present invention is made in an effort to resolve the above problems. It is an object of the present invention to provide a system which is able to provide a space wherein companies may provide their own enterprise advertisements together with Wi-Fi services in a dense population area, and public information can be provided. The above space may be used as a space to provide an emergency service in case of emergency situation.

To achieve the above objects, there is provided a system providing free Wi-Fi service, advertisement, and public information, which may include, but is not limited to, a system server 11 which is able to manage a plurality of routers and provide a free Wi-Fi service to a terminal of a user who is connected to the Wi-Fi service through any of the routers and provide advertisement and information; an advertisement owner server 12 which is able to provide an advertisement to the system server 11; and an information providing server 13 which is able to provide information to the system server.

The advertisement is either a web page push type or a reproducible media type.

The system server includes an advertisement ratio module which allows to adjust the ratio of advertisements and information which are provided to the terminal of the user.

The system server include a position DB which includes a position information on the installation of the routers, thus adjusting the ratio of the information and advertisement based on the position of the router; and a schedule DB which stores the providing ratio of the advertisement and information based on the time and situation.

The system server includes a viewing history DB, thus storing an advertisement that a user should see or an advertisement viewing hour.

The system server may be configured to provide the information based on the position of the router and then provide an advertisement.

### INDUSTRIAL EFFECTS

The present invention provides a system which is able to provide a space wherein companies can provide enterprise advertisements together with a Wi-Fi service in a dense population area, and in case of an emergency situation, the space may be used as an emergency notification service space.

### BRIEF DESCRIPTION OF THE DRAWINGS

The present invention will become better understood with reference to the accompanying drawings which are given only by way of illustration and thus are not limitative of the present invention, wherein;

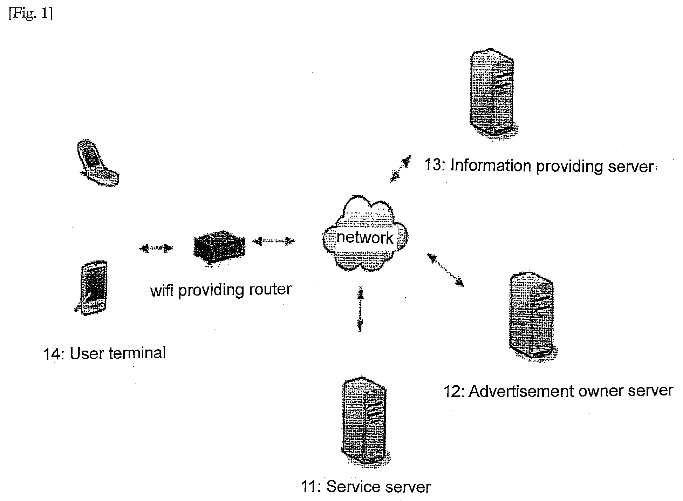

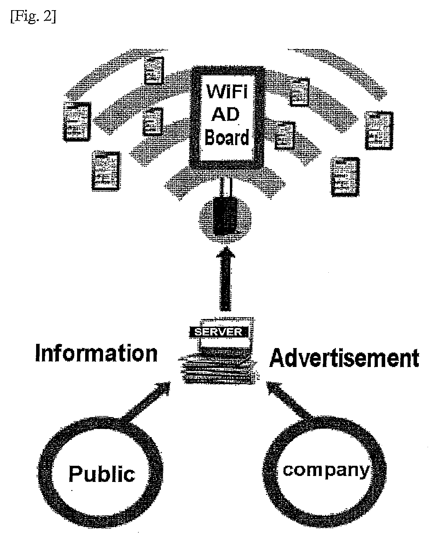

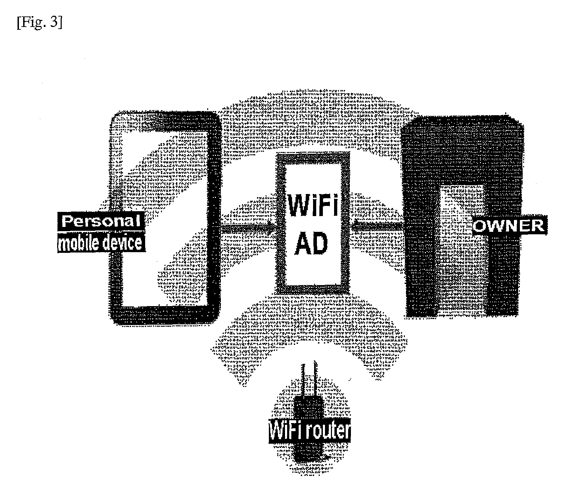

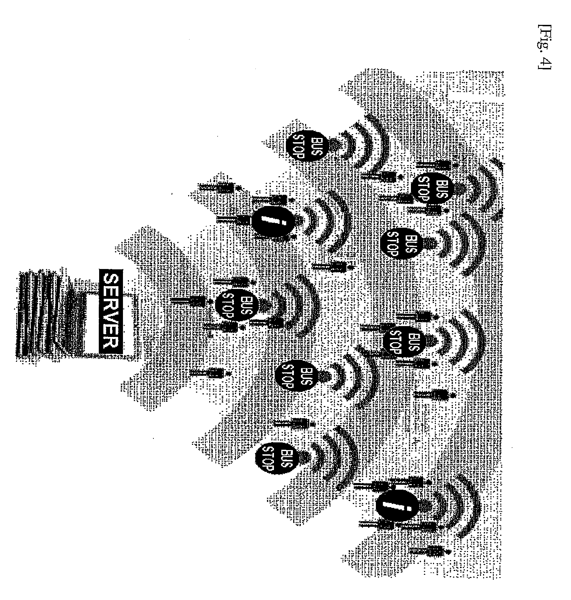

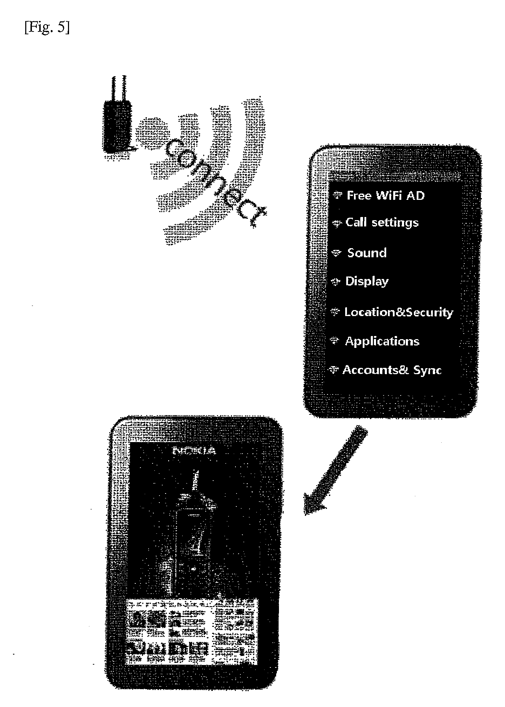

Figures 1 to 7 are views illustrating an exemplary embodiment of the present invention.

### MODES FOR CARRYING OUT THE INVENTION

The present invention will be described in detail with reference to the accompanying drawings. Figures 1 to 6 are views for describing the concepts of a service according to the present invention. In the present invention, a company which wants to provide a predetermined information or a commercial advertisement to persons is able to provide advertisements while providing a Wi-Fi connection service via a system server. A plurality of terminal users are obliged to watch advertisement in return for the use of a Wi-Fi service. For this, an advertisement owner server and an information provider server are connected to a system server 11.

Referring to Figure 1, the system server 11 is able to receive advertisements and information from the advertisement owner server 12 and the information provider server 13 and will provide the advertisements and information to the terminal 14 of the user who wants to use Wi-Fi services via a router, and the user terminal 14 may access the internet via the Wi-Fi connection.

Figure 2 is a view illustrating a concept wherein an enterprise and a public organ are providing advertisements and information to a user.

Figure 3 is a view illustrating a configuration wherein a mobile device that a personal user has is connected via a Wi-Fi service to advertisements by means of a Wi-Fi router of a system server according to the present invention.

Figure 4 is a view illustrating a type wherein a Wi-Fi service is provided via routers installed at multiple places from a Wi-Fi system server according to the present invention. The Wi-Fi routers may be installed in a region where a floating population is dense, for example, the Wi-Fi routers may be installed at a subway, a bus station, a shopping center, etc.

Figure 6 is a view illustrating an example wherein a Wi-Fi service is being used for a predetermined time period after an advertisement has been exposed to a user's terminal. The user terminal is able to search for an accessible Wi-Fi connection which provides advertisements.

The advertisement owner may have a change to provide commercial advertisements to a plurality of unanimous users by using a Wi-Fi router facility installed at multiple places, and the user is given a chance to access the internet for free. The internet Wi-Fi service may currently allow a plurality of unanimous users to use the internet for free. For example, free Wi-Fi services are available in the building of the Apple corporation. The users may also use for free the internet Wi-Fi connections at franchise coffee shops, for example, Starbucks. The installation of the router may entail costs, and the use of the exclusive internet line also entails costs. For this reason, the business man who wants to install such a router provides the Wi-Fi services only to his customers.

For the sake of the system server 11 according to the present invention, a limited range is selected for each specific area (HOT SPOT) where lots of customers or tourists gather, and the Wi-Fi routers are installed, thus providing them with the information that they may want and the commercial advertisements via the Wi-Fi services.

The Wi-Fi routers may be installed at the main road of a large city and all the bus stations, subway stations and public buildings which are located at the main road, so bus routes may be provided at the bus stations, and subway routes may be provided at the subway stations, and various events and information may be provided at the public buildings from the government or each government organ to citizens. The system server operating as an internet advertisement agent may allow all the users who use the Wi-Fi service at the hot spot using a push way to receive a category designated by the advertisement owner server on the first screen, thus providing a new route to a business man so that he can advertize. In particular, if a hot spot according to the present invention is installed in an area where such a service is available like the bus station or the telephone booth where it is easy to connect the communication line, it becomes possible to install the hot spot at more areas where a floating population is dense without spending a lot of costs.

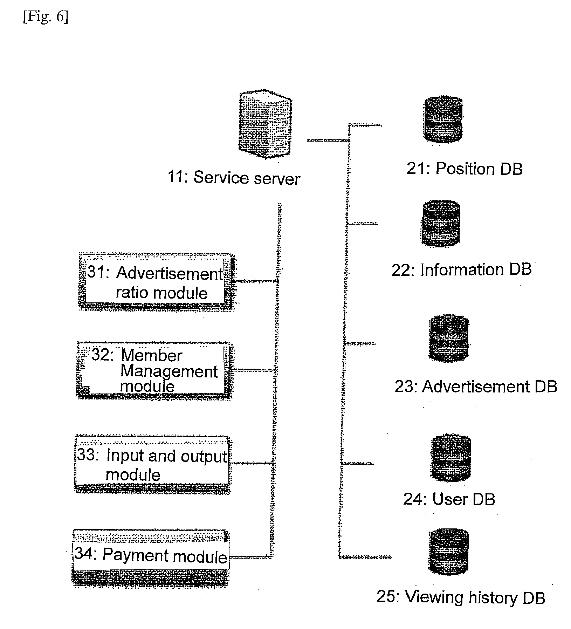

Figure 6 is a view illustrating the whole configuration for providing such a hot spot. The system server according to the present invention may include, but is not limited to, a position DB 21 which stores the positions of the hot spot where each router is installed; an information DB 22 which stores the contents of the information which is actually provided; and an advertisement DB 23 which stores the contents of the advertisements. The ratio of the information and advertisement provided to the user is determined by an advertisement ratio module 31. There may be further provided a viewing history DB 26 which stores the subscribed user DB and the advertisement viewing record for each user.

If a user enters the range of a specific hot spot, the user selects the Wi-Fi service of the hot spot, and the system server transmits a previously stored advertisement page to the user. At this time, it is notified to the user that the user can use a Wi-Fi service for free in return for the viewing of the advertisement page, and it may be possible to ask if the user agrees to use the Wi-Fi service for free in return for the viewing of the advertisement page. The advertisement page may be substituted with a page which provides a public information.

The advertisement may be provided in the form of a motion picture which can be played or may be provided in the form where a specific advertisement page is provided. In addition, the information specially made for a corresponding hot spot may be provided on a corresponding page in a pushing way together with the advertisement page. For example, in case of bus station, the information of bus routes, bus arrival time, etc. may be provided, and in case of tourist attraction spots, the information on a tour map, a good restaurant, a traffic guide, etc. may be provided. These information may be provided by a local self-government or enterprises to persons, but there is not a way to provide such information. For this, it needs to make a web page and wait until users visit the web page. According to the present invention, it is possible to dynamically provide such information to the visitors, the users, etc.

If a user enters the range of a predetermined hot spot, the ratio of the advertisement and the information may change based on the type of the corresponding hot spot. The information provided with priority can change. For example, if a corresponding hot spot is a bus station, the persons near the corresponding bus station may consider the bus information as the top priority. If the above users are allowed to see the bus arrival information after forcibly seeing the advertisement whenever they are connected, a lot of the users may feel irritated. In this case, a corresponding image may temporarily stored in the user's mobile device for the next time playback. Alternatively, the time to see the advertisement may be set based on an agreement for the next time playback.

The time that the user is supposed to see the advertisement may be stored in the viewing history DB in the user DB, and the user may see the corresponding advertisement after the connection to the information stored in the information DB is finished. In this case, the advertisement playback time may be previously set so that the user does not see the advertisement at the late time, for example, in the middle of the night. More specifically, the advertisement may be forcibly played only at a specific time. Once the user sees the advertisement of the advertisement DB at any time, the user may be allowed to use at another hot spot the Wi-Fi service only for the time period corresponding to the advertisement that the user has watched.

The previous seeing of the advertisement may be carried out even later, not being within the range of the corresponding hot spot. If there is any designated condition (time, place, etc.), the above previous seeing condition may be recognized completed as long as a corresponding condition is satisfied. More specifically, the viewing of the advertisement may be previously completed or may be completed late. This is not an obliged matter. Alternatively, the user may be obliged to see the advertisement on the first page or a banner or strap type advertisement may be provided on a part of the first page so as to guide the user to click the page linked to the second page.

The commercial advertisement may be included in the public advertisement. The area that the public advertisement and the commercial advertisement share may be adjusted by the system server.

In recent years, the screen size of the smart phone increases. A lot of tablet PCs is currently being used. Considering this feature, the area of the screen may be divided, so the public advertisement and the commercial advertisement may be provided combined.

In case of the emergency situation, for example, heavy rain or a lot of snow, the ratio of the information may be higher than the ratio of the advertisement. In this case, the information may be directly connected from the page which is necessarily routed for the sake of Wi-Fi connection. The advertisement ratio module 31 may be configured to adjust the ratio of the information and advertisement in consideration of the position of the hot spot, surrounding circumference, time, etc.

In case of fire, earthquake, heavy rain, intense heat, intense cold, etc., the system according to the present invention is able to prevent the increase of any damage in such a way to provide an emergency information on any disaster, etc. to the persons who use the Wi-Fi services. The advertisement ratio module 31 is able to judge the emergency state of the information, thus adjusting an information serving order, a serving time, etc.

For this, a schedule DB on the predictable situation may be further included, so the advertisement on the normal or emergency situation, the amount and serving order of information may be previously set and stored. The emergency situation may be determined based on an official situation setting information from a related government organ, for example, a heavy rain warning, a typhoon warning, a heavy snow warning or notification or a measurable information, for example, temperature, the amount of precipitation, wind speed, etc. In addition, the schedule may change based on weekdays, weekends, holidays, etc.

The router installed near the bus station may be configured to transmit the information, mainly, on the bus information guide, and the seeing of the advertisement may be carried out later. During the daytime except for commuting time, the ratio of the advertisement and information may be set similar, and in case of heavy rain, the weather information may be mainly provided.

The use of the public telephone booth is decreasing since the use of the mobile phone increases. There still is a lot of public telephone booths, but the public telephone booths are rarely used. At such public telephone booths, the router may be easily installed without any construction since they necessarily equip with a communication facility. The above public telephone booths may be used as a public telephone installation place and may also become a good facility to provide Wi-Fi service and information according to the present invention.

In addition, the users who are connected via the same router are located close to each other, various applications may be available. A communication group may be formed among the users who use the same route, while sending or receiving information. If families are lost due to a huge crow in a resort, a part, etc., they can communicate each other to find where they are so as to meet at a predetermined place. In this case, the present invention is very useful. If people is overcrowded, the capacity of the base station may be full, so a telephone calling and texting may be delayed or failed (for example, in the central town on 31 st day of December). In this case, the use of the Wi-Fi service may be a good solution by distributing the communication demands.

In addition, the owners near the hot spot may provide in real time sale information or advertisement to the users who are connected in the hot spot by via a predetermined advertisement means using their own IDs (for example, the name used to indicate the devices connected to the network or the name of the computer in the work group). If there is a lot of the users who use such services, a separate advertisement board can be made.

The advertisement ratio module 31 may first provide the information of the information DB to the place which needs the information, namely, the place where there is a lot of users, for example, a tourist attraction spot, a bus or taxi station, etc., and the ratio of the advertisement may be high at the place where a lot of persons gather except for the above places. For example, the advertisement viewing hour or the number of advertisement viewings may be, if necessary, lowered at the place, for example, a bus or taxi station or the advertisement viewing time may be delayed later or the information providing time may be brought forward.

The advertisement ratio module 31 may be configured to distribute the broadcast time by type of the advertisement or divide the advertisement area of one page where the advertisement is shown.

The advertisement ratio module 31 may receive the information of the subscribers of the smart phone and sort out, in the advertisement DB, the kinds of the advertisement provided based on the subscription information, for example, the age, sex, occupation, interesting matter, etc. of the subscriber of the smart phone. This configuration may allow to receive a corresponding information from the smart phone of the user while providing the Wi-Fi service.

Each hot spot may be used as an advertisement board or may be used as an advertisement board which is customized based on the characteristics of each region where the hot spot is located. The place where the Wi-Fi router is installed becomes a hot spot. The place where a lot of people gather, for example, a tourist attraction spot, a department store, a bus station, a shopping mall, a place near a train station, etc. in a predetermined region may be called a spot. The information and commercial advertisements may be provided, which match with the characteristics of each spot.

Information required in a predetermined region, for example, a necessary information, a specific event or a campaign may be provided from each regional organization and a public organ, which are designed for a special purpose, and enterprises may provide commercial advertisements. In case of a famous tourist attraction spot, tourists may receive information a surrounding information (a good restaurant, a photo zone, various preparations, etc.) of a famous spot where many people frequently visit or the information on a bus route by visiting the place which provides a Wi-Fi service without visiting in person the information center, etc. The basic information which can be served near the bus station is, for example, a bus arrival time, a time to a destination, and a bus route. In case of a department store, a predetermined event which is being launched or is planned to be launched may be advertised, whereupon a customer is able to confirm at a time what kinds of events are available. For the above-described advantages, the present invention is able to provide good advantages to Wi-Fi users, an information provider, an advertisement provider, etc.

In case of the public information in the past, it was contained in a separate book and a pamphlet or was contained in a form of a public advertisement during an advertisement time of a radio TV, etc. In case of an emergency situation, a public information was distributed in a form of a breaking news or am emergency disaster text was distributed using the SMS. If it needs to know more detailed information thereon, the user should search in the portal site and then should make an access thereto. The above procedure is complicated. There has not been any public information guide way using a device which uses Wi-Fi service like the smart phone. In recent years, since many persons have smart phones, the smart phones may be turned on and connected to the Wi-Fi service in case of emergency situation, so it becomes possible to directly receive a disaster information, etc. Since the hot spot is mainly installed at a place where a floating population is dense, it becomes possible to inform as many as persons of the emergency information.

If a construction is underway at a part of the road or an accident has occurred or there is a traffic jam due to a construction or accident near a bus station, the person may turn on his own smart phone and then know the reason for the traffic jam. In the past, such information could be known only if the user subscribes a predetermined service, for example, the TPEG service. According to the present invention, the user can know such information whenever the smart phone is connected.

The system according to the present invention may be used as a means at normal times to provide public information, which is necessary, not urgent and may be used in preparation for any emergency situation in such a way to adjust the ratio of the public information and the public advertisement.

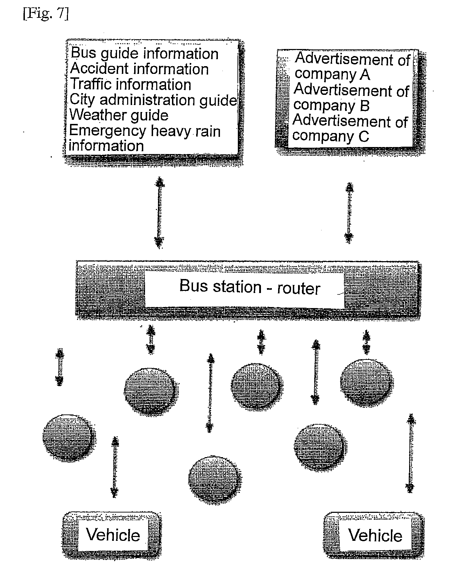

Figure 7 is a view illustrating another exemplary embodiment of the present invention. Referring to Figure 7, the router installed at a bus station may receive, from an information providing server, the information, for example, a bus guide information, an accident information, a traffic information, a city administration information, a weather guide, etc. In case of a heavy rain, the person may receive an emergency heavy rain information which belongs to the emergency guide information and the advertisements from a predetermined company A, B or C.

The thusly received information may be transmitted to the terminal of each user in consideration of the order, area, time, etc. in the form adjusted by the advertisement ratio module while the router provides a Wi-Fi information. In case where a vehicle which passes through a bus station is used, such information may be received and used. In case where the vehicle is used, an advertisement made of an audio file rather than a movie file is preferred. In order to use the information of the user DB, a necessary advertisement viewing time may be stored, and the user may be allowed to receive only the information without seeing the advertisement for a predetermined time period (for example, one day or one week) if the user finishes an obliged viewing time. In case where the vehicle is used, if there is not any traffic jam, and the router gets out of sight, the signal may be disconnected, and the Wi-Fi service may be no longer used. If there is a traffic jam without notice, and delay occurs, the Wi-Fi service may be available longer. In this case, the user can immediately check out the reason for the traffic jam with the aid of the router. For this, the information on the fact that the user is on the bus may be separately transmitted to the system server.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A system providing a free Wi-Fi service, advertisement, and public information, comprising:
a system server 11 which is able to manage a plurality of routers and provide a free Wi-Fi service to a terminal of a user who is connected to the Wi-Fi service through any of the routers and provide advertisement and information;
an advertisement owner server 12 which is able to provide an advertisement to the system server 11; and
an information providing server 13 which is able to provide information to the system server.

2. The system of claim 1, wherein the system server includes an advertisement ratio module which allows to adjust the ratio of advertisements and information which are provided to the terminal of the user.

3. The system of claim 2, wherein the system server include a position DB which includes a position information on the installation of the routers, thus adjusting the ratio of the information and advertisement based on the position of the router; and a schedule DB which stores the providing ratio of the advertisement and information based on the time and situation.

4. The system of claim 3, wherein the system server includes a viewing history DB, thus storing an advertisement that a user should see or an advertisement viewing hour.

5. The system of claim 4, wherein the system server is able to change a serving order of information and advertisement based on the position of the router, the time and situation.

6. The system of claim 5, wherein the advertisement ratio module is able to adjust the area which a public advertisement and a commercial advertisement occupy in the advertisement page which is provided.

7. The system of claim 6, wherein the advertisement is either a web page push type or a reproducible media type.

8. The system of claim 7, wherein the advertisement ratio module allows to put a disaster-related information on an advertisement page when an emergency disaster or accident occurs.
